(19) Europäisches Patentamt
European Patent Office
Office européen des brevets

(11) Publication number: **0 220 513 B1**

# (12) EUROPEAN PATENT SPECIFICATION

(45) Date of publication of patent specification: **21.04.93**

(51) Int. Cl.[5]: **C08J 5/08**, C08L 67/02, C08K 9/06

(21) Application number: **86113362.7**

(22) Date of filing: **29.09.86**

The file contains technical information submitted after the application was filed and not included in this specification

## (54) Stampable laminates of glass fiber reinforced poly(ethylene terephthalate).

(30) Priority: **03.10.85 US 783608**

(43) Date of publication of application:
**06.05.87 Bulletin 87/19**

(45) Publication of the grant of the patent:
**21.04.93 Bulletin 93/16**

(84) Designated Contracting States:
**BE CH DE FR GB IT LI NL**

(56) References cited:
**EP-A- 0 024 895**
**US-A- 4 044 188**
**US-A- 4 457 970**
**US-A- 4 469 543**

(73) Proprietor: **PPG INDUSTRIES, INC.**
**One PPG Place**
**Pittsburgh Pennsylvania 15272(US)**

(72) Inventor: **Raghupathi, Narasimhan**
**3978 Mury Highland Circle**
**Murrysville, Pa. 15668(US)**
Inventor: **Carley, Earl P.**
**484 Hillview Drive**
**New Kensington, Pa. 15068(US)**

(74) Representative: **Sternagel, Hans-Günther, Dr. et al**
**Patentanwälte Dr. Michael Hann Dr. H.-G. Sternagel Sander Aue 30**
**W-5060 Bergisch Gladbach 2 (DE)**

EP 0 220 513 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention is directed to glass fiber reinforced poly(ethylene terephthalate) laminates, wherein the glass fibers have a chemical treatment to render the glass fibers particularly suitable for reinforcing poly(ethylene terephthalate). More particularly, the present invention is directed to the glass fiber reinforced poly(ethylene terephthalate) with particularly suitable chemically treated glass fibers, where the laminate is molded at temperatures above the melting point of the poly(ethylene terephthalate).

Poly(ethylene terephthalate), hereinafter referred to as PET as a homopolymer and as a copolymer, has been reinforced with glass fibers for sundry molding applications. For example, chopped glass fiber strands reinforce PET in producing injection molded products. Also continuous glass fiber strands have been used in a compression molding operation, where the molding is at a temperature below the melting point and above the glass transition temperature of the PET.

In the latter process described in European Patent Application 0024895, molding occurs by thermoforming which utilizes essentially amorphous PET. Thermoforming cannot use crystalline PET because this PET must be melted before molding. The melting point of PET is in the range of 255° C to 265° C, which is much higher than most thermoplastic resins. Molten PET has a disadvantage in that it is subject to degradation on contact with water. But the higher melting point of the PET enables it to be used in a variety of higher temperature applications like fiber reinforced panels that can be painted and dried at elevated temperatures for use as automobile parts, appliance parts and the like. The thermoforming process of the European Patent Application allows for the production of the laminates of PET in order to take advantage of the higher melting point of the PET in molded products. The disadvantages of degradation of the PET polymer is not incurred even if there is any chance presence of water in the molding operation, since the PET is not melted in molding. U.S. Patent No. 4,457,970 (Das et al.) discloses

Glass fibers having present thereon an aqueous treating composition wherein the glass fibers are gathered into a plurality of glass fibers, wherein the aqueous treating composition comprises:

at least about 0.3 weight percent of the treated glass fiber strand where the composition has in weight percent of the aqueous composition,

a. about 0.05 to about 3 weight percent of a vinyl-containing coupling agent;

b. an epoxidized polar thermoplastic copolymer having about 2 to about 12 parts of the epoxidized monomer per 100 parts of copolymer and has a glass transition temperature from about - 10° C. to about 70° C.,

c. an unhydrolyzed or partially hydrolyzed organo-reactable silane coupling agent present in the amount of about 0.01 to about 1.2 weight percent,

d. a lubricant in the range of about 0.1 to 3 weight percent of the aqueous sizing composition,

e. an amount of water sufficient to make the percent solids of the aqueous composition in the range from about 1 to about 40 weight percent.

Additionally, it discloses a reinforced thermoplastic polymer, reinforced with the glass fibers defined above wherein the thermoplastic polymer is preferably poly(butylene terephthalate) or poly(ethylene terephthalate) or mixtures thereof.

Generally, the fiber reinforced thermoplastic polymers have glass fibers of various shapes, sizes, configurations and chemical treatments. The chemical treatments on the surfaces of the glass fibers protect the glass fibers from interfilament abrasion during formation and subsequent processing, and the chemical treatment makes the glass fibers more compatible with the organic polymers they are to reinforce. The chemical treatments conventionally have film forming polymers, lubricants, coupling agents, wetting agents, and emulsifiers and the like. The glass fibers with the chemical treatments are gathered into bundles or strands and prepared into chopped strands or continuous strands. The chopped strand can be used for injection molding and for compression molding, while the continuous strands can be used for compression molding. Also chopped and/or continuous strand mats can be used where the mat has the construction of: loose, chopped or continuous strand, and/or intermingled and/or bonded chopped and/or continuous strands. The mechanical and/or chemical bonding of the strands in the mat provides the mat with some integrity between the strands. An example of a mechanically bound glass fiber strand mat is a needled mat of continuous strands or long chopped glass fiber strands or a mixture thereof. An illustration of a continuous strand mat which is needled is that given in U.S. Patent No. 4,335,176 (Baumann). The production and use of intermingled and/or bonded mats present considerations different from those presented by the production and use of entirely loose chopped or continuous strand mat.

Reinforcement of polymers with mats of continuous and/or chopped strands, where the strands are intermingled and/or bonded places several demands on the glass fibers comprising that mat. The strands must have good processability in producing the mat, and must permit good interfacial contact with the

matrix polymer in the molded product. The processability of the strand into the mat involves: removing the strand from a source of the glass fiber strand, dispersing the strand into a mat, and intermingling or bonding some strands to each other. The good interfacial contact between the mat and the matrix polymer is best produced in a laminating operation that allows the polymer to flow into and around and through the mat and also by a molding operation that allows the mat to flow to conform to the configuration of the mold. The highest degree of interfacial contact between the matrix polymer and the mat is achieved when the thermoplastic polymer is in a melted state immediately prior and/or during the laminating and molding steps. This is especially the case for the higher molecular weight thermoplastic polymers.

Glass fiber reinforced PET laminates that are used in a molding operation where the PET is melted require the use of sized glass fibers having good high temperature stability. This requirement is necessary since the PET is melted in and around the glass fibers in producing the pre-molded laminate. This is a requirement even in using sized glass fibers for the laminates to be molded in the thermoforming process. Also the requirement is necessary where the laminates are molded at temperatures above the melting temperature of the PET, and where any molded parts from the laminates will experience long term use in high temperature environments. This enables the utilization of the fiber reinforced PET to its fullest potential given its capability of use at temperatures higher than other types of thermoplastic polymers such as polybutylene terephthalate and nylon.

It is an object of the present invention to provide laminates of glass fiber reinforced PET, where the reinforcing glass fibers are chemically treated both to complement the application of the molded parts of the laminates in high temperature environments while allowing for good processability of the glass fiber strand into reinforcement for the PET laminate and molded part and that are moldable to produce molded parts having good physical properties for long-term high temperature applications.

## SUMMARY OF THE INVENTION

The foregoing objects are accomplished by the laminates of the present invention which have crystalline and/or amorphous poly(ethylene terephthalate) homopolymers or copolymers with minor amounts of other copolymerizable materials and an effective reinforcing amount of chemically treated glass fibers. The chemically treated glass fibers have a dried residue of an aqueous chemical treating composition that in addition to water has: one or more aqueous soluble, dispersible or emulsifiable thermoplastic bisphenol A type polyester film forming polymer either alone or in a blend with an epoxy-containing film forming polymer; an epoxy functional organo silane coupling agent or a mixture of an epoxy functional organo silane coupling agent and an amino organo silane coupling agent; and a cationic lubricant.

Thus, provided is a stampable laminate of thermoplastic polymer reinforced with chemically treated glass fibers, **characterized by**

a. glass fiber strands present in an amount of 5 to 70 weight percent of the laminate selected from the group consisting of chopped strands, continuous strands, and mats of chopped and/or continuous strands, wherein the glass fibers have a dried residue of an aqueous chemical treating composition, having:

1) a film forming polymer selected from the group consisting of epoxy polymers and epoxidized, essentially saturated polyester polymers and mixtures thereof, where the film former has a thermal decomposition of at least around 300 ° C in an effective film forming amount,

2) organo silane coupling agents selected from the group consisting of epoxy-containing, organo-functional coupling agents and mixtures of epoxy-containing, organo-functional coupling agents and amino-containing, organo-functional coupling agents in a ratio of 1:3 to 99:1,

3) cationic lubricant in an effective lubricating amount, and

4) an aqueous carrier in an effective amount to allow for treatment of the glass fibers, and

b. poly(ethylene terephthalate) present in an effective matrix resin amount, and wherein the glass fiber strands are present in an amount of 5 to 200 parts per 100 parts of the polyethylene terephthalate, wherein the amount of the chemical residue present on the glass fibers is in the range of 0.1 to 2 weight percent LOI, and wherein the glass fibers with the chemical residue have in the residue an amount of organo coupling agent resulting from the aqueous chemical treating composition having an amount of the organo coupling agent in the range of 0.1 to 1 weight percent of the aqueous chemical treating composition.

Further, provided is a Stampable laminate of glass fiber reinforced polyethylene terephthalate for compression molding into parts, comprising:

a. at least two needled mats of glass fiber strands present in an amount of 5 to 70 weight percent of the laminate, wherein the glass fibers have a dried residue of an aqueous chemical treating composition,

consisting essentially of:

1. an aqueous emulsion of dispersion of a bisphenol A polyester film forming polymer and having internal emulsification through ethoxylation and having a weight average molecular weight in the range of 30,000 to 45,000 and having a polydispersity index of around 1.12 and a Mz/Mv of around 1.08 constituting a major portion of the solids of the aqueous chemical treating composition,

2. gamma glycidoxypropyltrimethoxy silane coupling agent present in an amount of 0.1 to 2 weight percent of the solids of the aqueous chemical treating composition,

3. polyamino amide cationic lubricant which is a partially amidated polyalkylene amine prepared through condensation with fatty acids, where at least one of the fatty acids is pelargonic acid in an amount of 0.05 to 0.5 weight percent of the aqueous chemical treating composition, and

4. water in an amount to give a total solids of the aqueous chemical treating composition in the range of 1 to 30 weight percent wherein the amount of the dried residue of the aqueous chemical treating composition is in the range of 0.1 to 2 weight percent LOI of the glass strands, and

b. nucleated polyethylene terephthalate present as the matrix of the mat reinforcement covering and impregnating the mat resulting from an overlay ply and an underlay ply and an inbetween ply in combination with the mats of glass fiber strands, wherein the polyethylene terephthalate has a rate of crystallization which allows molding of the laminate that is heated to the melting point of polyethylene terephthalate in a time period of 20 to 60 seconds at a molding temperature in the range of about 120°C to 280°C to result in stamped parts having at least 30 to 50 percent crystallization.

Finally, provided is a Process of producing thermoformed molded products, comprising:

a. forming the former laminate, wherein the polyethylene terephthalate is amorphous polyethylene terephthalate or predominantly amorphous polyethylene terephthalate to allow the laminate to be thermoformed or cold molded or modified polyethylene terephthalate, which is modified to have a crystallization rate effective to allow the laminate that is heated to the melting point of the polyethylene terephthalate to be stampled at a temperature in the range of 120°C to 220°C to produce a stamped product having at least 30 to 50 percent crystallization in 5 to 60 seconds, and wherein polyethylene terephthalate is melted and quickly cooled to avoid the formation of crystals to produce a laminate where the poly(ethylene terephthalate) is in the amorphous state,

b. molding the stampable laminate at a temperature less than the melting point of the PET and greater than the glass transition temperature where the temperature is maintained at a crystallization temperature for a period of time to induce crystallization.

The laminate can be formed by contacting the poly(ethylene terephthalate) material as a film, sheet, and/or extrudate with the chemically treated glass fibers in the form of chopped glass fiber strands, or mats of chopped glass fiber strands and/or continuous glass fiber strands where the mats can have intermingled strands and/or bonded strands. The contacting is done under such conditions to have the melted PET intimately contact the chemically treated glass fibers under appropriate pressures. The laminate can be molded in a compression molding operation such as thermoforming or in compression molding operation subsequent to heating the PET laminate to a temperature above the melting point of the PET.

## BRIEF DESCRIPTION OF THE DRAWING

FIG. 1 is a nuclear magnetic resonance curve for an aqueous emulsion of a bisphenolic polyester resin which is commercially available under the trade designation Neoxil® 954 material from Savid.

## DETAILED DESCRIPTION OF THE INVENTION

Laminates have glass fibers in the form of chopped strand or chopped and/or continuous strand mat, where the mats may be present in one or more plys. The glass fibers in any of these forms are chemically treated glass fibers. The glass fibers are produced from any fiberizable glass composition like calcium, aluminum borosilicate compositions like "E-glass" or "621-glass" and low or free boron and/or fluorine derivatives thereof. The glass fibers produced from direct or indirect melt operations are of any filament diameter from A-fibers through Z-fibers 1 µm through 50 µm (1 micron through 50 microns).

The glass fibers are treated with an aqueous chemical treating composition during or after their formation, wherein the aqueous treating composition has three types of components in addition to water. The aqueous treating composition has an aqueous soluble, dispersible or emulsifiable film forming polymer that is both compatible with and soluble in the PET polymeric matrix. The compatibility and solubility are such that the treated glass fibers have good wet-out in the PET matrix polymer when the fibers and matrix polymer are intimately contacted. The film forming polymer has a thermal decomposition temperature

greater than 300 ° C. Preferably, the film forming polymer forms a clear film upon evaporation of water and any solvents or upon curing that has limited tackiness and that is tough. The characteristics of limited tackiness of the film forming polymer contributes to limited tackiness of the dried residue of the aqueous chemical treating composition. The film of the dried residue of the aqueous treating composition has a less tacky characteristic than a film of any polymer like Epon® 828 resin. The toughness of the film enables the formation of a near continuous film on the surface of the glass fibers. In achieving such a film characteristic, there is no penalty of reducing, to any great extent, the wettability of the treated glass fibers.

A nonexclusive example of a suitable film forming polymer is an aqueous soluble, dispersible or emulsifiable bisphenolic polyester polymer like one formed from bisphenol A, butene diol or maleic anhydride or maleic acid and adipic acid with internal and/or external emulsification through the use of a polyalkylene polyol such as polyethylene glycol. Preferably, the polyester is internally emulsified through ethoxylation for a polymer with a weight average molecular weight in the range of 30,000 to 45,000 and a polydispersity index Mw/Mn of 2 to 9. Preferably, this type of bisphenol polyester polymer is the sole film forming polymer in the aqueous chemical treating composition.

An example of such a thermoplastic polyester is the single aqueous emulsion of alkoxylated bisphenol polyester resin commercially available under the trade designation Neoxil® 954 and manufactured by Savid, Como, Italy. The properties of the Neoxil® 954 resin are as follows: appearance - milky liquid, solids content - 46 ± 3%, pH - 3-5, viscosity at 23 ° C - 20000 ± 500 cps (20 ± 0.5 pascal . seconds). An NMR curve for the Neoxil® 954 resin emulsion is shown in FIG. 1. The NMR was performed on a Varian EM-360 60 MHz proton NMR Spectrometer with a sweep time of 5 minutes and sweep width of 10 ppm and an end of sweep of 0 ppm and a zero reference of tetramethylsilane (TMS) and an ambient sample temperature and with $CDCL_3$ solvent. The amount of the film forming polymer in the aqueous treating composition is in the range of 1 to 20 weight percent of the solids of the aqueous treating composition.

When more than one film forming polymer is used, an epoxy-containing polymer or copolymer can be used along with the epoxydized polyester film forming polymer. Separate aqueous emulsions of the epoxy-containing polymer and the polyester film forming polymer can be combined into a single emulsion, or one single emulsion can be prepared, wherein the epoxy-containing polymer and polyester film forming polymer are solubilized, dispersed or emulsified in the aqueous emulsion. Nonexclusive examples of the epoxy-containing polymers include: epoxy-containing polymers or copolymers which have an epoxy equivalent weight in the range of 180 to 230 grams of polymer for 1 gram of equivalent of epoxide. The epoxy-containing polymer or copolymer assists in yielding treated glass fibers with good wettability in the PET polymeric matrix. The epoxy equivalent weight or epoxide equivalent which is defined as the weight of resin in grams which contains one gram equivalent of epoxy can be determined by any method known to those skilled in the art. Nonexclusive examples include infrared spectroscopy and wet analysis such as the titration method with sodium hydroxide after the addition of pyridinium chloride in pyridine to the epoxy polymer. When the epoxy resin is used, its amount in the aqueous treating composition can vary from a minor to a major portion of the solids of the aqueous treating composition. The epoxy resins that can be used can be epoxy resins prepared from bisphenol A and a comonomer such as epihalohydrin to form the diglycidyl compounds such as 4-isopropylidene bis(2,6-dibormophenol), dihydroxybenzene, 1,1,2,2,-tetra(p-hydroxy phenyl) ethane, 1,4-butane diol, glycerol, polyoxyalkylene (glycol), linoleic dimer acids, 1,1,3-tris(p-hydroxyphenyl)-propane and the like in reaction with epihalohydrin can also be used. Also, epoxy resins produced from aliphatic glydicyl ethers can be used. Also, epoxy resins produced by the reaction of monoepoxy compounds with themselves or other epoxy generating compounds can be used, for example, unsaturated monoepoxy compounds may be homopolymerized through the unsaturation to produce polyepoxy polymer like poly(allyl glycidyl ether). Particularly, suitable epoxy resins are the phenolic epoxies which are obtained by the reaction of a stoichiometric excess of an epihalohydrin such as epichlorohydrin with a polyhydric phenol such as bis(4-hydroxyphenol)-2,2-propane, bis(hydroxyphenyl) methane which is obtained by the acid condensation of two moles of phenol with one mold of formaldehyde, hydroquinone, resorcinol or with polyhydroxy alcohol such as polyalkylene glycols, sorbitol, glycerol and the like. By varying these portions of the epihalohydrin, polyhydroxy compound and/or by varying the reaction conditions, compounds of low, intermediate or higher molecular weights may be produced which range from liquids to solids. Useful commercially available epoxy resins include that available from Shell Chemical Corporation under the trade designation Epon® 828 epoxy resin, and the epoxies available from Ciba-Geigy under the trade designation Araldite® resins, and from Dow Chemical Company under the trade designations D.E.R. or D.E.N. resins, and the Epi-Rez® resins available from Celanese Polymer Specialties Company. Preferably, the aqueous chemical treating composition is essentially free of poly(vinyl acetate) film forming polymers.

The aqueous soluble, dispersible or emulsifiable polyester and/or epoxy-containing polymer can have an emulsion or dispersion produced with any suitable surfactant known to those skilled in the art. In preparing a single emulsion having a blended epoxy-containing polymer and polyester film forming polymer or separate emulsion of each polymer, any nonionic, cationic, anionic or amphoteric emulsifying agents can be used. It is preferred to use nonionic emulsifying agents having an HLB in the range to match the ionic character of the blended polymers. For example, one or more surfactants which are condensates of ethylene oxide with hydrophobic bases formed by condensation with propylene oxide with propylene glycol can be used. For example, the Pluronic® F-108 surfactant manufactured by BASF Wyandotte Industrial Chemical Group can be used to form a suitable emulsion or dispersion.

In addition to the aqueous soluble, dispersible or emulsifiable film forming polymer, the aqueous treating composition also has present one or more epoxy-containing organo-silane coupling agents with or without the presence of amino-containing organofunctional coupling agents.

The epoxy-containing, organofunctional silane coupling agents that are used have a formula such as:

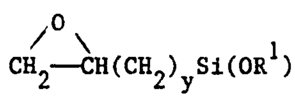

Where $R^1$ is a lower alkyl group or hydrogen to make (OR') a water hydrolyzable group such as hydroxyl, halogen, alkoxyl, preferably having one to five carbon atoms and acryloxy, where x is an integer from 1 to 3, and where y is an integer from 1 to 6. Representative examples of the epoxy silanes include beta-hydroxyethyltriethoxysilane; gamma-hydroxybutyltrimethoxysilane; 2,3-epoxypropyltrimethoxysilane; 3,4-epoxybutyltriethoxysilane; bis-(2,3-epoxypropyl)dimethoxysilane; glycidoxypropyltrimethoxysilane; and, 3,4-epoxycyclohexyltriethoxysilane.

The amino silane coupling agent can be selected from the group of monoamino and diamino silanes. In addition to the amine silane coupling agent, there may be present a lubricant modified amino silane coupling agent where the lubricant is a standard textile lubricant known to those skilled in the art. Both of these silane coupling agents, when they are monoamino silane coupling agents, would have amino functionality which can be designated by the general formula

$NH_2R-Si-(OR^1)_3$

wherein: R is an alkylene radical having from 2 to 8 carbon atoms and $R^1$ is a lower alkyl radical or hydrogen; the lower alkyl radical having 1 to 5 carbon atoms, preferably having 1 or 2 carbon atoms. Nonexclusive example of amino silanes include gamma-aminopropyltriethoxysilane, N-(trimethoxy silylpropyl)ethane diamine acrylamide, aminomethyltriethoxysilane, aminopropyltrimethoxysilane, diaminopropyldiethoxysilane, triaminopropylethoxysilane.

A number of other silanes containing at least one organic group substituted by one or more amino groups or epoxy groups may also be used in the practice of the present invention, and these silanes are well known to those skilled in the art. As will be appreciated by those skilled in the art, the aforementioned silane coupling agents can be used as the silane coupling agent or its partial or full hydrolysis product (silanol) or its polymerization product (polysiloxane). The amount of the silane coupling agent present in the aqueous sizing composition is in the range of 0.1 to 2 weight percent of the aqueous sizing composition.

A mixture of the epoxy-functional organosilane and amine-functional organo silane coupling agents is also an acceptable alternative. The mixture contains from around at least 20 weight percent epoxy-organofunctional silane but, preferably, the epoxy-organo-functional silane is in a predominant amount.

In addition to the foregoing components of the aqueous chemical treating composition, there is a glass fiber cationic lubricant in an effective lubricating amount. The lubricants are those that are cationic in nature and which impart lubricity to the glass fibers and gathered bundles of glass fibers and strands. Examples include acid solubilized, fatty acid amides such as stearic amide. The fatty acid amides are both saturated and unsaturated and the acid group contains from 4 to 24 carbon atoms. Also, anhydrous acid solubilized polymers of the lower molecular weight unsaturated fatty acid amides are included. Also included are the alkyl imidazolines, which are formed by reaction of fatty acids with polyalkylene polyamines under conditions to produce ring closure. A particularly suitable cationic lubricant is a polyamino amide material having an amine value of 200 to 800 that is preferably prepared by using fatty acids at least one of which is pelargonic acid. Also this material can be solubilized further with acetic acid. A nonexclusive example of such a material is the polyalkyleneimine partially amidated with fatty acid like pelargonic acid that is

commercially available from Emery Industries, Inc. under the trade designation Emerylube® 6717. This material is a viscous liquid with a pour point of 55, a density in 0.995 kg/l (lbs/gallon of 8.3), a Gardner color of 10, a cloud point of less than 25° C, a flash point of 282° C (540° F) and is soluble in water and dispersible in mineral oil. Another suitable material is manufactured under the trade designation Cirrasol® 185A which is an anhydrous material with a deep reddish amber color which is a viscous liquid at room temperature. It is water dispersible and a one percent solution has a pH of 8.9 to 9.4. When the glass fiber lubricant contains a reactable nitrogen group, the effective amount of the lubricant should be limited to substantially prevent any crosslinking of any epoxy-containing polymer that may be present by the nitrogen-containing groups of the glass fiber lubricant. Generally, the effective amount of the glass fiber cationic lubricant is in the range of 0.05 to 0.5 weight percent of the aqueous chemical treating composition.

Although other additional film forming polymers, coupling agents, lubricants, processing aids and thickeners can be employed in the aqueous chemical treating composition of the present invention, the aqueous chemical treating composition is essentially free of any epoxy curing agnts, whose sole function in the aqueous sizing composition would be to crosslink the epoxy-containing polymer or copolymer. Preferably, the aqueous chemical treating composition is essentially free of any materials which would not be solubilizable in the polyester film forming polymer or in the blend of epoxy-containing polymer or copolymer and polyester film-forming polymer. Such a material is the nonionic water insoluble hydrocarbon glass fiber lubricants such as hydrogenated hydrocarbon oil. Typically, the water insoluble lubricant is a hydrogenated or saturated fatty acid ester of glycerol and the aqueous chemical treating composition is essentially free of these types of materials. Also the aqueous chemical treating composition is preferably essentially free of hygroscopic components that might attract and retain moisture in high humidity environments.

The aqueous chemical treating composition has a sufficient amount of water to give a total solids for the composition that is sufficient to enable the glass fibers to be treated during their formation with the aqueous chemical treating composition. Generally, the total solids of the aqueous composition is in the range of 1 to 30 weight percent and preferably 2 to 10 percent. In all events, the amounts of the solid components for an aqueous chemical treating composition should not exceed that amount which will cause the viscosity of the solution to be greater than 100 mPa•S (centipoise)at 20° C. Aqueous solutions having a viscosity of greater than 100 mPa•S (centipoise) at 20° C are very difficult to apply to glass fibers during their formation without breaking the fibers. It is preferred that the viscosity of the size be between 1 and 20 mPa•S (centipoise) at 20° C for best results. Chemical treating compositions with thixotropic gelling or foaming agents can have known viscosities for gels and foams used to treat glass fibers. The pH of the aqueous chemical treating composition is below 7, and preferably should be in a range of 4.8 to 5.2 to maintain the stability of the composition. The aqueous chemical treating composition can be made by combining the components simultaneously or sequentially.

The aqueous chemical treating composition can be applied to the glass fibers by any method known to those skilled in the art such as during the formation of the glass fibers after the glass fibers have cooled to a sufficient temperature to allow the application of the aqueous chemical treating composition. The aqueous chemical treating composition, typically referred to as a sizing composition, is applied to these glass fibers by applicators having belts, rollers, sprays and the like. The treated glass fibers then can be gathered into one or more strands and collected into a package commonly referred to as a forming package. Also, the glass fibers can be collected into one or more strands and chopped as a wet chopped product. Also, the glass fibers can be gathered into one or more strands and collected as a roving. The glass fibers in any form are dried to reduce their moisture content. Drying can occur at temperature and time conditions equivalent to a range from ambient drying to drying at a temperature in the range of 121° C (250° F) to less than 149° C (300° F) for 11 hours. Preferably, for producing needled mat, the glass fibers are dried at conditions less than the aforementioned maximum. For instance, in this case, drying can occur at a temperature of around 62.78 - 68.3° C. (145-155° F) for 3 to 5 hours. When the strands are air dried, the moisture content is in the range of around 8 percent or less and more particularly, around 4 to 6 percent. For oven dried strands, the moisture content can be around one or less weight percent. The drying can be accomplished in any conventional glass fiber drying oven such as forced air ovens, dielectric ovens, and the like. The dried glass fibers have a dried residue of the aqueous chemical treating composition present on the surface of the glass fibers making up the strands. Preferably, the amount of the dried residue on the glass fibers is in the range of 0.5 to 1.2 weight percent LOI (loss on ignition).

The dried glass fiber strands in the chopped and/or continuous mat form contribute useful reinforcement properties to polymers. The mats can be made by any method known to those skilled in the art. Particularly suitable mats have bonded or intermingled strands effected by either mechanical or chemical bonding. The mats are generally constructed by distributing the chopped and/or continuous glass fiber strands in a

fashion to prepare a width and length and thickness of the strands. One such method is to distribute the glass fiber strands across a moving conveyor belt on which the mat is collected. When the strands of the mat are to be bonded or intermingled, the mat is contacted with a chemical bonding agent, for instance, in the form of a spray over the mat or is contacted with a needler. Such a needling device is shown in U.S. Patent No. 4,277,531 in Figure 1. Also the process for traversing the glass fiber strand can be any process known to those skilled in the art, one example of which is U.S. Patent No. 3,915,681, showing the traversing of the glass fiber strands to form a mat. Also the mats can be formed directly in the process of forming the glass fibers as is shown in U.S. Patent 4,158,557. By this latter method, the glass fiber strands would not be collected into forming packages and dried but they are conveyed directly to a traversing distributor to place the glass fiber strands into a mat form on a moving conveyor belt.

In the laminates of the present invention, the glass fibers reinforce the PET polymer, where the PET polymer in the laminate or in the final molded part is to be in amorphous, crystalline, or semi-crystalline form. The PET which is virgin or recycled PET may have agents or may have been treated to increase the rate of crystallization of the PET. The PET can be prepared by bulk or solution techniques from copolymers of vinyl aromatic compounds and/or alpha-beta unsaturated cyclic anhydrides, and rubber modified copolymers where the rubber is grafted or blended. The PET can also be in the form of copolymers with minor amounts of other copolymerizable materials, for instance, 0 to 30 mole percent of sebacate, and/or azelate copolymers or block copolymers with poly(ethylene oxide). Also the PET can be in substantially amorphous form with 0 to 18 percent crystallinity and weight average molecular weights ranging from 5,000 to 60,000.

Any method known to those skilled in the art for increasing the rate of crystallization of the PET can be used. For example, such methods include: decreasing the molecular weight or inherent viscosity of the PET to increase the rate of crystallization, altering the structure of the PET to be a random or blocked copolymer, utilizing higher amounts of comonomer to produce the PET, increasing the rate of diffusion within the melt by adding lubricants to the PET melt, adding organic or inorganic nucleating agents, maintaining catalyst residues of insoluble catalysts within the PET where the catalyst was used to produce the PET and utilizing the PET, with a prior thermal history to have a strong nucleating effect to increase the rate of crystallization at temperatures below 280 ° C.

It is preferred to utilize PET which has a rate of crystallization so that the PET can be stamped into parts at temperatures of 120 to 220 ° C in a time of 20 to 60 seconds to result in stamped parts having a range of crystallinity of at least 30 to 50 weight percent. The PET is moldable by injection molding, extrusion molding or compression molding and has an inherent viscosity of 0.25 to 1.5 in a solvent consisting of 60 percent phenol and 40 percent by weight tetrachloroethane.

It is preferred to utilize a PET homopolymer which is crystalline and has a faster rate of crystallization from melt by the presence of nucleating agents. Examples of such nucleating agents include: alkali metal salts of highly polar organic compounds; alkali salts of aromatic, aliphatic, unsaturated aliphatic, monocarboxylic acids; dimers or trimers or saturated carboxylic acids like $C_8$ fatty acids; alkali metal salts of aromatic carboxylic acids substituted with halogens and/or nitro groups; inorganic compounds such as boron nitride, alkali metal salts of carbonic acid, minerals like talc, mica, soaps having alkali metal salts of tallow fatty acids; ionomer resins; metal salts of carboxylic acids; metal salts of inorganic acids; alkali metal salts of oligomers or ethylene terephthalate; powders of inorganic substances such as clay, silica, alumina, titania, graphite, calcium carbonate, magnesium carbonate, zinc oxide and aluminum silicate, glass beads and the like. The amount of the nucleating agent is properly chosen in appropriate amounts to increase the rate of crystallization. For example, the nucleating agent can be present in an amount of 0.01 to 5 percent by weight based on the weight of the polyethylene terephthalate. Also the nucleating agents can have average particle diameters of around 20 $\mu$m (micron) or less. Most preferably the amount of the nucleating agent in the polyethylene terephthalate allows for production of molded parts from the PET reinforced laminate having maximum crystallinity within a period of time of less than 40 seconds at temperatures of 130 to 210 ° C.

In addition, the PET polymer can have present agents to improve resistance to cracking due to shrinkage or crystallization, rubbers of polyolefins to improve impact strength, agents to improve impact resistance, coloring agents, ultraviolet and heat stabilizing agents, opacifying agents, thermo-oxidative stabilizers like esterically hindered phenols and phenolic derivatives and fire retardants.

The laminate has the glass fiber strands in any form in an amount of 5 to 200 parts by weight per 100 parts by weight of the polyethylene terephthalate. The laminate is formed by contacting the glass fibers in any form with the PET; for example, chopped glass fiber strands are contacted with the PET in an injection molding, extrusion molding or compression molding operation to form the laminate. In injection molding and extrusion molding, the chopped glass fibers are intimately dispersed in the PET and the laminate is formed

as an injection blank or extrusion blank for further molding operations. The continuous glass fiber strands are usually in the form of mats, where one or more plys of mat are contacted with one or more plys of PET to form a laminate on a laminating line for subsequent compression molding or thermoforming or cold molding.

To form the laminate for compression molding, one or more mats of glass fibers strands, preferably dried, needled mats, are fed to a laminator. One or more resin overlays are passed with the mats. Also a resin extrudate or film or sheet can be placed between the mats before they are compressed by the belts of the laminator. The extrudate is typically in the form of a layer of resin across the width of the mats and is constantly delivered to the system from an extruder die. Also it is possible just to have an extrudate pass between the mats or between the mats and over the mats. The overlays and mats and extrudate are laminated typically by applying pressure to them at elevated temperatures. The temperatures are maintained sufficiently high to insure the overlay sheets become molten. Residence times are not critical but should be long enough to insure that the resins thoroughly impregnate the mats. The thoroughly impregnated resin-glass laminate is then cooled usually while maintaining pressure on the laminate until the resin solidifies. The resulting product is a sheet of resin having a mat undernearth both of its major surfaces. Preferably in producing the laminate, the PET resin has been dried. Where amorphous or substantially amorphous PET is desired in the laminate, the cooling zone in the laminator will be operated at such a speed to avoid crystallization of any of the PET when the laminates are to be thermoformed. Where crystalline PET is desired in the laminate, the cooling zone will not be operated at too fast a speed to allow for formation of crystalline PET. Also it is possible to use multiple layers of mats and resin where some of the mats can be chopped glass fiber strand mats as shown in U.S. Patent 3,684,645 (Temple). The laminate is prepared with overlay sheets but laminates may also be prepared using extrudate alone. It is also possible to use an extruder with multiple dyes or multiple extruders to provide the layers of extrudate, on each side and in between the mats and the third in the center of the mats.

The laminate can be molded by any process known to those skilled in the art for molding PET and especially by any known compression molding process. For instance, thermoforming can be used where the laminate is made with PET in the amorphous or substantially amorphous state. In thermoforming, the laminate is molded at a temperature, where the temperature is less than the melting temperature and greater than the glass transition temperature and the crystallization temperature is maintained for a period of time to endure crystallization. In thermoforming, the flow during molding would be negligible but stretching of the material can occur in the die. With the laminate made of crystalline PET, molding is conducted in such a fashion to melt the PET in a preheater and the hot laminate is placed in a hot die and molded. In utilizing melted PET in molding, substantial flow of the polymer can occur which enables molding of complicated parts. To avoid accumulation of moisture on the laminates before molding, the laminates can be packaged in polyethylene plastic bags or any other type of plastic bags which provide a barrier to prevent moisture from settling on the laminates. It is also possible with the appropriate rate of heating before molding to obviate the necessity of wrapping the laminates in a moisture barrier between laminating and molding. With the appropriate rate of heating, possible degradation of the PET due to the presence of moisture can be reduced.

## PREFERRED EMBODIMENT OF THE INVENTION

In the preferred embodiment of the present invention, calcium aluminum borosilicate glass fibers are attenuated from molten batch. The glass fibers are coated with the aqueous chemical treating composition during the formation of the glass fibers from a multitude of orifices in a bushing of a glass-melting furnace by a belt type binder applicator.

The aqueous chemical treating composition has a single aqueous emulsion having bisphenol polyester film forming polymer available from Savid under the trade designation Neoxil® 954 as the sole polymeric material for film formation. The preferred silane coupling agent is the sole silane coupling agent of gamma glycidoxypropyltrimethoxy silane available from Union Carbide Corporation under the trade designation A-187 silane, and the amount of the A-187 silane is 0.1 to 5 weight percent, preferably in the range of 2.7 to 5 weight percent of the solids of the aqueous chemical treating composition. The water soluble cationic glass fiber lubricant is preferably the Emerylube® 6717, which is present in an amount of 1 to 2.5 weight percent of the solids of the aqueous chemical treating composition. The water which is present to make up the aqueous chemical treating composition is that amount to give a total solids content preferably around 5 to 6 weight percent of the aqueous chemical treating composition. The amount of the bisphenol polyester resin is the remainder of the solids from the amounts of the coupling agent, and lubricant. The pH of the aqueous chemical treating composition is preferably in the range of 4.5 to 6.2.

The aqueous chemical treating composition is prepared by hydrolyzing the gamma glycidoxypropyltrimethoxy silane with acetic acid in an amount of 1 milliliter of acetic acid for 20 grams of the silane in a premix tank. The hydrolyzation is performed by adding the acetic acid to 10 to 20 weight percent of the water to be used in preparing the chemical treating composition and adding the silane to this mixture with stirring until complete hydrolyzation occurs. The cationic glass fiber lubricant is added to hot water 76.7° C (170° F) with stirring where the amount of water is about 1 percent of the total amount of water used in preparing the aqueous chemical treating composition in a premix tank. The aqeuous emulsion of the bisphenol polyester as about 46 percent solids is combined with about twice its weight of water in a main mix tank. The hydrolyzed silane and glass fiber lubricant are added to the main mix tank. A small amount of antifoaming agent like SAG 10 can be added and the mix which has been agitated is diluted to the final desired volume with water. The final pH of the aqueous chemical treating composition is then adjusted to be in the range of 4.5 to 6.2 with a compatible organic acid such as acetic acid.

The aqueous chemical treating composition is applied to the glass fibers where the fibers have any diameter known to those skilled in the art, but generally fiber diameters can range from 2.62 micrometers (10.3 x $10^{-5}$ inch) to 30.48 µm (120 x $10^{-5}$ inch) or more. The aqueous chemical treating composition is applied to the glass fibers to give an add-on of the chemical treating composition in the range of 0.5 to 8 percent LOI (Loss on Ignition). The glass fibers, which are usually G, K, or T-fibers, depending on the ultimate use of the laminate, are gathered into strands. The strands of glass fibers are collected on a winder to produce a forming package and a plurality of the forming packages are dried in a Michigan oven at a temperature in the range of 65-104° C (150° to 220° F) for 4 to 10 hours to reduce the moisture content of the strand to less than 1 and preferably less than 0.3.

A plurality of the glass fiber strands with the chemical treatment are conveyed to a traversing distributor to be projected downwardly onto a moving conveyor, preferably a wire neck chain. The strands are traversed across the width of the conveyor on a continuous basis to cover the conveyor with glass fiber strands. The mat is layered by the plurality of strands to a desired depth typically containing some moisture (U.S. Patent 4,404,717). The mat of dried strands is conveyed to a needler such as that shown in U.S. Patent 4,404,717, and is needled. If the mat contains 4 to 15 percent by weight moisture, it is fed continuously to the oven where air is at a temperature between 21° C - 48.9° C (70° F to 120° F) in the oven to dry the mat. The mat leaving the oven or the mat of previously dried strands has substantially reduced moisture content of about 2 percent or less on a weight basis of the mat. If necessary, air at 21° C - 48.9° C (70° F to 120° F) is passed across the width of the mat to reduce the moisture content of the mat further and to provide a mat entering the needler at a moisture content of 0.5 to 1 percent. The needler has an environment controlled a 21° C - 48.9° C (70 to 120° F) and a low relative humidity below 60 percent. The continuous strand mat is needled and emerges at a final moisture content of 0.3 percent or less.

The continuous glass fiber strand needled mat used in the laminates of the present invention are prepared by passing a continuous, nonbonded, glass strand mat through a conventional felting loom or needler which is equipped with barbed needles. During passages through the needler, the mat is punctured by a series of rows of such needles to both entangle the glass strands and to break strands to thereby provide a mechanically bonded mat having short strands and filaments therein. The needling also provides, when all needled barbs are positioned on the needles in the same direction, a coherent mat structure having one major surface with a dense accumulation of fibers protruding from the surface and a second major surface containing fibers protruding from the surface but having substantially less fibers than the dense major surface.

The continuous glass fiber strand mats which are needled in the manner described typically emerge from the needler in a cohesive state and have sufficient mechanical integrity that they can be handled without distorting their generally flat shape. Characteristically, they contain two major surfaces, two side edges and a leading edge. The trailing edge of the mat is provided when the mat is cut after reaching a desired length. In a typical manufacturing process, continuous strand mat is formed continuously and fed through the needling machine continuously. It is folded in boxes for use in laminating or rolled into large rolls for the same purpose at convenient lengths.

The continuous glass strand mats after needling are arranged into two mats to reinforce the PET resin in the form of a laminate. The mats are fed to a drying zone to reduce the moisture content of the mats to less than 0.3 percent and conveyed further to a laminator. Two resin overlays are passed with the two mats and a resin extrudate is passed between the mats. The PET resin before forming the overlay and the extrudate is dried and is kept under a nitrogen atmosphere. The extrudate is typically in the form of a layer of resin across the width of the mats and is constantly delivered to the system from an extruder and an associated die. The RPM in the extruder for 35 percent glass content with 0.091546 g/sq cm (3.0 ounces per square foot) mat on a 0.254 mm (10 mil) overlay at a line speed of 3.94 m (12 feet) per minute is 88 to

90, although any equivalent speed can be used for other parameters. The melt temperature for the PET is 293.3 ± 8.3 ° C (560 ± 15 ° F) and the die lip opening is around 3.05 mm (120 mils). The extrusions and mats are laminated typically by applying pressure to them when they contact each other at elevated temperatures. The temperature in the laminating zone is maintained sufficiently high to ensure the extrudate becomes molten. Typically the laminating temperature is around 282 ° C (540 ° F) to 307 ° C (585 ° F). The resin was preconditioned by drying for 6 hours at 165 ° C (330 ° F) prior to lamination or overlay fabrication and the resin is maintained in a positive nitrogen pressure in the extruder hopper. The pressure is applied in the laminator by belts coated with mold release agents. The residence time of lamination is long enough to ensure that the resin thoroughly impregnates the mats. The thoroughly impregnated resin glass laminate is cooled at a rate of 0.56 to 3.3 ° C (1 to 6 ° F) per second to allow for the rate of crystallization to produce substantially crystallized laminates.

The laminates are molded by heating the laminates to the melting point and placing the laminates in hot die molds.

The present invention is further illustrated without limiting the scope of the invention as claimed by the following examples.

Example 1

An aqueous chemical treating composition in an amount of 18.9 liters for treating glass fibers was prepared by an order of addition as indicated by numerals and letters preceeding the following materials in the stated amounts:

| | |
|---|---|
| 1A Gamma glycidoxypropyltrimethoxy silane A-187 | 163 grams |
| 1B Acetic acid | 7.5 grams |
| 1C Water (deionized) | 2270 grams |
| 2A Partially amidated polyalkyleneimine cationic lubricant (Emery 6717) | 15.1 grams |
| 2B Water (hot) | 379 grams |
| 3A Aqueous dispersion of bisphenol A polyester film forming polymer Neoxil® 954 - 47 ± 2 % Solids | 2272 grams |

The aqueous chemical treating composition was applied to glass fibers having a T-fiber diameter and the glass fibers were gathered into strands and wound onto a forming package. A plurality of strands removed from a plurality of forming packages were used in making a needled glass fiber strand mat according to the method of the preferred embodiment. The main conveyor traveled at a speed of 2.8 m (9.2 feet) per minute ± 0.6 m (2 feet) per minute and the needler and 19 gauge needles and had penetrations (per $6.452 \cdot 10^{-4}$ $m^2$ (inch squared) of 140 and a needled penetration) of 16 ± 1 millimeter. The mats were dried with infrared heaters on-line prior to being collected. The moisture of the mat was 1 percent maximum.

The laminates were made with the needled mat and polyethylene terephthalate. The PET was nucleated to have a more rapid rate of crystallization in the range of 20 to 40 seconds for complete crystallization when the PET is taken from melt to a temperature in the range of 138 ° C to 160 ° C (280 ° F to around 320 ° F). Two plys of mat were dried to have a moisture content of 0.2 percent by weight. These plys were contacted with 10 pieces of film prepared from PET pellets dried for 6 hours at 165.6 ° C (330 ° F) in a positive nitrogen pressure. The construction resulted from contacting was 3 pieces of PET film on each side of the two plys of mat and three pieces of film between the mats. The laminating was conducted at a temperature of around 293 ° C (560 ° F) with resin temperature of 258 ° C-266 ° C (396 to 510 ° F). The laminates were cooled at a rate of 0.56 to 3.3 ° C (1 to 6 ° F) per second after they were contacted in the heating zone for a sufficient period of time to allow the PET to impregnate the mat. The rate of cooling allows for formation of crystals in the PET.

Other laminates such as those of example 1 were prepared in the same manner as in example 1 except with a different chemical treating composition. The difference was the presence of a mixture of epoxy functional organo silane coupling agent and an amino functional organo silane coupling agent and some laminates were prepared using only the amino organo silane coupling agent. The physical properties of the laminates are compared with the laminate of example 1 in Table 1.

TABLE 1

| SILANE OPTIMIZATION STUDY OF LAMINATE[1,2] PROPERTIES | | | | |
|---|---|---|---|---|
| Silane Content in Treating Composition ($g^3$) A-187/A-1100 | Overlay | FLEXURAL | | |
| | | Tensile Strength /$10^6$ kPa($10^3$ psi) | Strength /$10^6$ kPa ($10^3$ psi) | Modulus /$10^6$ kPa ($10^6$ psi) |
| Example 1 | As is Dried | 64.8(9,400)<br>102.7(14,900) | 141,30.9.7(20,500)<br>166,81.00(24,200) | 6.69(0.97)<br>6.90(1.00) |
| 109/A-187<br>54 - A-1100 | As is Dried | 64.1(9,300)<br>92.4(13,400) | 142,00.9.5(20,600)<br>144,80.9.7(21,000) | 6.55(0.95)<br>6.69(0.97) |
| 81.5/A-187<br>81.5 - A-100 (4) | As is Dried | 90.3(13,100)<br>91.0(13,200) | 133,80.7.0(19,400)<br>171,1.10(24,800) | 4.83(0.70)<br>7.58(1.1) |
| 54/A-187<br>109 - A-1100 | As is Dried | 80.0(11,600)<br>104.8(15,200) | 137,20.7.2(19,900)<br>168,91.0.5(24,500) | 4.96(0.72)<br>7.24(1.05) |
| A11 A-1100 | (Sliver could not be processed on the mat line) | | | |

[1]Avg. glass content in all cases : 31% to 33%
[2]Glass fiber strand LOI 0.9%
[3]g of silane for 18.925 ℓ (5-gallon) binder batch
[4]A-1100 is gamma aminopropyltriethoxy silane

The laminates made in accordance with example 1 were molded into boxes. The laminates were in a size of 16.51 cm (6 1/2 inches) to 25.4 cm (10 inches) and weighed 415 to 430 grams and were heated to a temperature of 287.8° C (550° F) within a residence time of 4-5 minutes. These laminates were molded in a hot die mold at a temperature of 176.7 to 143.3° C (350° F to 290° F) with a stamping tonnage of 60,963 Kg (60 tons) 45, a pressure of 7.09 x $10^{-6}$ to 1.64 x $10^{-6}$ Kg/$m^2$ (100 to 150 tons/$ft^2$) and dwell time of 45 seconds. The boxes having a bottom and four sides were exposed to hot air for different intervals of time and the retention of strength properties were measured. The tensile strength, flexural strength and flexural modulus tests were conducted in accordance with standard ASTM tests. The results are shown in Table 2 which indicate good retention of strength properties by the molded article of the laminates of the present invention.

TABLE 2

HOT AIR EXPOSURE OF MOLDED PET BOXES

| TEST | CONTROL A | CONTROL B | CONTROL C | CONTROL D | 1 WK. (148.9°C) (300°F) EXPOSURE A | 1 WK. (148.9°C) (300°F) EXPOSURE B | 1 WK. (148.9°C) (300°F) EXPOSURE C | 1 WK. (148.9°C) (300°F) EXPOSURE D |
|---|---|---|---|---|---|---|---|---|
| Inherent Viscosity | 0.60 | 0.57 | 0.58 | - | - | - | - | - |
| Tensile Strength, ($10^3$ psi) | (9,500) | (9,700) | (10,700) | (11,000) | (12,400) | (9,200) | (9,600) | (11,000) |
| $x10^6$ kPa | 65.5 | 66.9 | 73.8 | 75.8 | 85.5 | 63.4 | 66.2 | 75.8 |
| Flexural Strength, ($10^3$ psi) | (26,300) | (24,000) | (28,500) | (25,200) | (22,900) | (20,200) | (24,500) | (28,700) |
| $x10^6$ kPa | 181.3 | 165.5 | 196.5 | 173.8 | 157.8 | 139.3 | 168.9 | 197.9 |
| Flexural Modulus, (X $10^6$ psi) | (1.16) | (1.10) | (1.36) | (1.18) | (1.14) | (1.11) | (1.17) | (1.34) |
| $x10^6$ kPa | 8.0 | 7.58 | 9.38 | 8.14 | 7.86 | 7.65 | 8.07 | 9.24 |
| Glass % wt. | 31.65 | 30.19 | 39.20 | 33.10 | 33.72 | 31.53 | 36.22 | 37.65 |

TABLE 2

HOT AIR EXPOSURE OF MOLDED PET BOXES (Cont'd)

| TEST | 2 WK. (148.9°C) (300°F) EXPOSURE A | 2 WK. (148.9°C) (300°F) EXPOSURE B | 2 WK. (148.9°C) (300°F) EXPOSURE C | 2 WK. (148.9°C) (300°F) EXPOSURE D | 4 WK. (148.9°C) (300°F) EXPOSURE A | 4 WK. (148.9°C) (300°F) EXPOSURE B | 4 WK. (148.9°C) (300°F) EXPOSURE C | 4 WK. (148.9°C) (300°F) EXPOSURE D |
|---|---|---|---|---|---|---|---|---|
| Inherent Viscosity | - | - | - | | - | - | - | - |
| Tensile Strength, ($10^3$ psi) | (10,500) | (8,900) | (7,500) | (10,300) | (9,500) | (9,500) | - | (10,200) |
| $x10^6$ kPa | 72.4 | 61.4 | 51.7 | 71 | 65.5 | 65.5 | | 70.3 |
| Flexural Strength, ($10^3$ psi) | (19,100) | (23,200) | (25,200) | (29,500) | - | (18,900) | - | (22,400) |
| $x10^6$ kPa | 131.7 | 160 | 173.8 | 203.4 | | 130.3 | | 154.4 |
| Flexural Modulus, (x $10^6$ psi) | (1.05) | (1.20) | (1.27) | (1.30) | - | (0.95) | - | (1.13) |
| $x10^6$ kPa | 7.24 | 8.27 | 8.76 | 8.96 | | 6.55 | | 7.79 |
| Glass % wt | 29.83 | 33.96 | 38.99 | 35.66 | - | - | - | - |

Additional boxes were prepared from laminates of the present invention as shown in Table 3, where the blank weights ranged from 420 to 447 grams and the blank lofts ranged from 19.1 to 20.0 mm (0.75 to 0.8 inch) and the blank temperatures ranged from 285°C to 288°C (545°F to 550°F). These blanks were stamped into boxes with a 60,963 Kg (60 ton) press.

These boxes were tested for strength properties along with exposure to hot air and for laminates that were stored before molding. The results of these tests are shown in Table 3. The tensile and flexural strength, flexural modulus, elongation, Izod impact tests and DTUL tests were conducted in accordance with standard ASTM procedures.

The results show good retention of strength properties of the molded article from the laminates of the present invention.

TABLE 3

MEAN PROPERTIES FOR MOLDED BOXES

| Sample Test Temperature | Tensile (psi) | $10^3$ kPa | Flex (psi) | $10^3$ kPa | Flex Mod (psi x $10^6$) | x$10^6$ kPa | Izod Notched (ft lb/inch) | J/m | Glass content (%) | DTUL |
|---|---|---|---|---|---|---|---|---|---|---|
| Control Dried | 13,900 | 95.8 | 31,000 | 213.8 | 1.11 | 7.65 | 13.22 | 705.67 | 35.97 | 248.8°C |
| Control Undried | 12,500 | 86.2 | 29,600 | 204.1 | 1.16 | 8.0 | -- | | 35.21 | 247.7°C |
| -40°F (-40°C) | 14,800 | 102 | 29,600 | 204.1 | 1.16 | 8.0 | -- | | -- | -- |
| 150°F (65.6°C) | 12,600 | 86.9 | 30,700 | 211.7 | 1.04 | 7.2 | -- | | 34.87 | -- |
| 200°F (93.3°C) | 10,200 | 70.3 | 26,300 | 181.3 | 0.86 | 5.93 | -- | | 35.63 | -- |
| 250°F (121.1°C) | 9,200 | 63.4 | 16,800 | 115.8 | 0.49 | 3.38 | -- | | 35.61 | -- |
| 300°F (148.9°C) | 7,900 | 54.5 | 12,800 | 88.3 | 0.45 | 3.1 | -- | | 35.80 | -- |
| (Properties measured at 75°F (23.9°C)) | | | | | | | | | | |
| Weeks at 300°F (148.9°C) - HOT AIR | | | | | | | | | | |
| Week 0 | 11,000 | 75.8 | 25,200 | 173.8 | 1.18 | 8.14 | -- | | 33.1 | -- |
| Week 1 | 11,000 | 75.8 | 28,700 | 198 | 1.34 | 9.24 | -- | | 37.65 | -- |
| Week 2 | 10,300 | 71 | 29,500 | 203.4 | 1.30 | 8.96 | -- | | 35.66 | -- |
| Week 4 | 10,200 | 70.3 | 22,400 | 154.4 | 1.13 | 7.79 | -- | | 34.28 | -- |
| Week 6 | 8,400 | 57.9 | 23,800 | 164.1 | 1.22 | 8.4 | -- | | 32.0 | -- |
| Week 8 | 9,900 | 68.3 | 23,200 | 160 | 1.17 | 8.06 | -- | | 33.0 | -- |
| Week 10 | 10,700 | 73.8 | 18,500 | 127.6 | 1.10 | 7.58 | -- | | 32.7 | -- |
| Week 12 | 10,800 | 74.5 | 22,000 | 151.7 | 1.17 | 8.06 | -- | | 34.1 | -- |

## Claims

**1.** A stampable laminate of thermoplastic polymer reinforced with chemically treated glass fibers, **characterized by**

a. glass fiber strands present in an amount of 5 to 70 weight percent of the laminate selected from the group consisting of chopped strands, continuous strands, and mats of chopped and/or continuous strands, wherein the glass fibers have a dried residue of an aqueous chemical treating composition, having:

1) a film forming polymer selected from the group consisting of epoxy polymers and epoxidized, essentially saturated polyester polymers and mixtures thereof, where the film former has a thermal decomposition of at least around 300° C in an effective film forming amount,
2) organo silane coupling agents selected from the group consisting of epoxy-containing, organo-functional coupling agents and mixtures of epoxy-containing, organo-functional coupling agents and amino-containing, organo-functional coupling agents in a ratio of 1:3 to 99:1,
3) cationic lubricant in an effective lubricating amount, and
4) an aqueous carrier in an effective amount to allow for treatment of the glass fibers, and

b. poly(ethylene terephthalate) present in an effective matrix resin amount, and wherein the glass fiber strands are present in an amount of 5 to 200 parts per 100 parts of the polyethylene terephthalate, wherein the amount of the chemical residue present on the glass fibers is in the range of 0.1 to 2 weight percent LOI, and wherein the glass fibers with the chemical residue have in the residue an amount of organo coupling agent resulting from the aqueous chemical treating composition having an amount of the organo coupling agent in the range of 0.1 to 2 weight percent of the aqueous chemical treating composition.

**2.** Laminate of claim 1, wherein the glass fiber strands in the form of a mat are in the form of a bonded mat selected from the group consisting of mechanically bonded mats, needled mats, and chemically bonded mats.

**3.** Laminate of claims 1 - 2 wherein the glass fibers having the chemical residue have in the residue a bisphenol polyester resin selected from the group consisting of a bisphenol polyester resin, which is internally emulsified with ethoxylation, and is present in an aqueous emulsion or dispersion; and alkoxylated bisphenol A polyester film forming polyester in an aqueous emulsion having a solids content of 46 ± 3 percent, pH from 3 to 5, viscosity at 23° C of 20,000 ± 500 mPa.s (cps) and where the bisphenol A polyester resins have a weight average molecular weight in the range of 30,000 to 45,000, where the aqueous emulsion or dispersion is present in an amount so that the bisphenol A polyester constitutes the major portion of the solids of the aqueous chemical treating composition.

**4.** Laminate of claims 1 - 3, wherein the glass fibers with the chemical residue have a chemical residue which is essentially free of materials selected from the group consisting of: poly(vinyl acetate), and any hygroscopic agents which would absorb moisture in a high humidity environment.

**5.** Laminate of claims 1 - 4, wherein the cationic lubricant in the aqueous chemical treating composition is a polyamino amide lubricant made with pelargonic acid, where the lubricant is present in an amount in the range of 0.05 to 0.5 weight percent of the aqueous chemical treating composition.

**6.** Laminate of claims 1 - 5, wherein the polyethylene terephthalate is selected from the group consisting of polyethylene terephthalate that is modified to have an effective crystallization rate to allow the laminate which is heated to the melting point of the polyetheylene terephthalate to be stamped into a product having at least 30 to 50 percent crystallization and 5 to 60 seconds at a temperature of stamping of 120° to 220° C, polyethylene terephthalate having an effective crystallization rate by the presence of one or more nucleating agents in an amount of 0.1 to 1 weight percent of polyethylene terephthalate, polyethylene terephthalate in the amorphous state so the laminate can be stamped by thermoforming or cold molding, and polyethylene terephthalate having a weight average molecular weight in the range of from 45,000 to 65,000.

**7.** Laminate of claims 1 to 6, having two plys of mat and at least one overlay ply and one underlay ply of polyethylene terephthalate and a layer of polyethylene terephthalate between the two mats.

**8.** Process of producing thermoformed molded products, comprising:

a. forming the laminate of claims 1 to 5 and 7, wherein the polyethylene terephthalate is amorphous polyethylene terephthalate or predominantly amorphous polyethylene terephthalate to allow the laminate to be thermoformed or cold molded or modified polyethylene terephthalate, which is modified to have a crystallization rate effective to allow the laminate that is heated to the melting point of the polyethylene terephthalate to be stampled at a temperature in the range of 120° C to 220° C to produce a stamped product having at least 30 to 50 percent crystallization in 5 to 60 seconds, and wherein polyethylene terephthalate is melted and quickly cooled to avoid the formation

of crystals to produce a laminate where the poly(ethylene terephthalate) is in the amorphous state,
b. molding the stampable laminate at a temperature less than the melting point of the PET and greater than the glass transition temperature where the temperature is maintained at a crystallization temperature for a period of time to induce crystallization.

**9.** Stampable laminate of glass fiber reinforced polyethylene terephthalate for compression molding into parts, comprising:
a. at least two needled mats of glass fiber strands present in an amount of 5 to 70 weight percent of the laminate, wherein the glass fibers have a dried residue of an aqueous chemical treating composition, consisting essentially of:
1. an aqueous emulsion of dispersion of a bisphenol A polyester film forming polymer and having internal emulsification through ethoxylation and having a weight average molecular weight in the range of 30,000 to 45,000 and having a polydispersity index of around 2 to around 9 and a Mz/Mv of around 1.08 constituting a major portion of the solids of the aqueous chemical treating composition,
2. gamma glycidoxypropyltrimethoxy silane coupling agent present in an amount of 0.1 to 5 weight percent of the solids of the aqueous chemical treating composition,
3. polyamino amide cationic lubricant which is a partially amidated polyalkylene amine prepared through condensation with fatty acids, where at least one of the fatty acids is pelargonic acid in an amount of 0.05 to 0.5 weight percent of the aqueous chemical treating composition, and
4. water in an amount to give a total solids of the aqueous chemical treating composition in the range of 1 to 30 weight percent wherein the amount of the dried residue of the aqueous chemical treating composition is in the range of 0.1 to 2 weight percent LOI of the glass strands, and
b. nucleated polyethylene terephthalate present as the matrix of the mat reinforcement covering and impregnating the mat resulting from an overlay ply and an underlay ply and an inbetween ply in combination with the mats of glass fiber strands, wherein the polyethylene terephthalate has a rate of crystallization which allows molding of the laminate that is heated to the melting point of polyethylene terephthalate in a time period of 20 to 60 seconds at a molding temperature in the range of 120 ° C to 280 ° C to result in stamped parts having at least 30 to 50 percent crystallization.

**10.** Laminate of Claim 9, wherein the nucleated polyethylene terephthalate has a crystallization rate to allow formation of maximum crystallization in molding the heated laminate into a part in a time period of less than 40 seconds.

## Patentansprüche

**1.** Prägbares Laminat aus mit chemisch behandelten Glasfasern verstärktem thermoplastiscben Polymer, **dadurch gekennzeichnet, daß**
a) Glasfaserstränge in einer Menge von 5 bis 70 Gew.-% des Laminats vorhanden sind, ausgewählt aus der aus Stapelfasern, Endlosfasern und Matten aus Stapelfasern und/oder Endlosfasern bestehenden Gruppe, wobei die Glasfasern einen getrockneten Rückstand einer wäßrigen chemischen Behandlungszusammensetzung aufweisen mit:
1) einem filmbildenden Polymer, ausgewählt aus der aus Epoxypolymeren und epoxidierten, im wesentlichen gesättigten Polyesterpolymeren und Mischungen derselben bestehenden Gruppe, wobei der Filmbildner eine Wärmezersetzungstemperatur von mindestens etwa 300 ° C aufweist und in einer tatsächlich filmbildenden Menge vorhanden ist,
2) Organosilankupplungsmitteln, ausgewählt aus der Gruppe bestehend aus epoxyhaltigen, organofunktionellen Kupplungsmitteln und Mischungen von epoxyhaltigen, organofunktionellen Kupplungsmitteln und aminhaltigen, organofunktionellen Kupplungsmitteln in einem Verhältnis von 1:3 bis 99:1,
3) kationischem Gleitmittel in einer tatsächlich schmierenden Menge und
4) wäßrigem Träger in einer die Behandlung der Glasfasern ermöglichenden Menge und
b) Poly(ethylenterephthalat) in einer harzmatrixbildenden Menge vorhanden ist,
wobei die Glasfaserstränge in einer Menge von 5 bis 200 Gewichtsteilen pro 100 Gewichtsteile Polyethylenterephthalat vorhanden sind, wobei die Menge des auf den Glasfasern vorhandenen chemischen Rückstandes im Bereich von 0,1 bis 2 Gew.-% Glühverlust (LOI) liegt und wobei die Glasfasern mit dem chemischen Rückstand im Rückstand eine Menge organisches Kupplungsmittel aufweisen, die aus der wäßrigen chemischen Behandlungszusammensetzung herrührt, die das

organische Kupplungsmittel in einer Menge von 0,1 bis 2 Gew.-%, bezogen auf wäßrige chemische Behandlungszusammensetzung, enthält.

**2.** Laminat nach Anspruch 1,
**dadurch gekennzeichnet,**
daß die Matten aus Glasfasersträngen gebundene Matten sind, ausgewählt aus der aus mechanisch gebundenen Matten, genadelten Matten und chemisch gebundenen Matten bestehenden Gruppe.

**3.** Laminat nach Ansprüchen 1 bis 2,
**dadurch gekennzeichnet,**
daß die Glasfasern mit dem chemischen Rückstand in dem Rückstand ein Bisphenol-Polyesterharz aufweisen, ausgewählt aus der Gruppe bestehend aus durch Ethoxylierung innerlich emulgiertes Bisphenol-Polyesterharz und das als wäßrige Emulsion oder Dispersion anwesend ist, und filmbildendes alkoxyliertes Bisphenol-A-Polyesterharz in wäßriger Emulsion, mit einem Feststoffgehalt von 46 ± 3%, pH-Wert von 3 bis 5, Viskosität bei 23 ° C von 20.000 ± 500 mPa.s (cps) und wobei die Bisphenol-A-Polyesterharze ein gewichtsmittleres Molekulargewicht im Bereich von 30.000 bis 45.000 aufweisen, wobei die wäßrige Emulsion oder Dispersion in einer solchen Menge vorhanden ist, daß der Bisphenol-A-Polyester den Hauptteil der Feststoffe der wäßrigen chemischen Behandlungszusammensetzung bildet.

**4.** Laminat nach Ansprüchen 1 bis 3,
**dadurch gekennzeichnet,**
daß die Glasfasern mit dem chemischen Rückstand einen chemischen Rückstand aufweisen, der im wesentlichen frei ist von Stoffen, ausgewählt aus der aus Poly(vinylacetat) und jeglichen hygroskopischen Stoffen, die in stark feuchter Umgebung Feuchtigkeit absorbieren, bestehenden Gruppe.

**5.** Laminat nach Ansprüchen 1 bis 4,
**dadurch gekennzeichnet,**
daß das kationische Gleitmittel in der wäßrigen chemischen Behandlungszusammensetzung ein Polyamin-Amid-Gleitmittel ist, hergestellt mit Pelargonsäure, wobei das Gleitmittel in einer Menge im Bereich von 0,05 bis 0,5 Gew.-% der wäßrigen chemischen Behandlungszusammensetzung vorhanden ist.

**6.** Laminat nach Ansprüchen 1 bis 5,
**dadurch gekennzeichnet,**
daß das Polyethylenterephthalat ausgewählt ist aus der Gruppe bestehend aus modifiziertem Polyethylenterephthalat, so daß es eine solche Kristallisationsgeschwindigkeit aufweist, daß es möglich ist, das bis zum Schmelzpunkt des Polyethylenterephthalats erwärmte Laminat zu einem Erzeugnis auszuformen, das bei einer Formtemperatur von 120 ° C bis 220 ° C nach 5 bis 60 Sekunden mindestens 30 bis 50% Kristallisation aufweist, Polyethylenterephthalat, das in Gegenwart von 0,1 bis 1 Gew.-%, bezogen auf Polyethylenterephthalat, eines oder mehrerer Keimbildner eine nutzbare Kristallisationsgeschwindigkeit aufweist, amorphes Polyethylenterephthalat, so daß das Laminat durch Warmformen oder Kaltformen prägbar ist, und Polyethylenterephthalat mit einem gewichtsmittleren Molekulargewicht im Bereich von 45.000 bis 65.000.

**7.** Laminat nach Ansprüchen 1 bis 6,
**dadurch gekennzeichnet,**
daß es zwei Schichten von Matten und mindestens eine Deckschicht und eine Unterschicht aus Polyethylenterephthalat und eine Polyethylenterephthalatschicht zwischen den zwei Matten aufweist.

**8.** Verfahren zum Herstellen von warmgeformten Formteilen durch
a) Ausbilden des Laminats nach Ansprüchen 1 bis 5 und 7, wobei das Polyethylenterephthalat amorphes Polyethylenterephthalat oder überwiegend amorphes Polyethylenterephthalat ist, um das Laminat warmformen oder kaltformen zu können, oder so modifiziertes Polyethylenterephthalat ist, daß es eine tatsächliche Kristallisationsgeschwindigkeit aufweist, so daß es möglich ist, das Laminat bis zum Schmelzpunkt des Polyethylenterephthalats zu erwärmen, es bei einer Temperatur im Breich von 120 ° C bis 220 ° C zu einem Formteil auszuformen, das nach 5 bis 60 Sekunden mindestens 30 bis 50% Kristallisation aufweist, und Schmelzen und rasches Abkühlen von Polyethylenterephthalat, um die Bildung von Kristallen zu vermeiden, so daß ein Laminat mit amorphem Poly(ethylenterephthalat) ausgebildet wird,
b) Verformen des prägbaren Laminats bei einer Temperatur unter dem Schmelzpunkt des PET und über der Glasübergangstemperatur, wobei die Temperatur auf Kristallisationstemperatur für eine Zeit gehalten wird, um Kristallisation auszulösen.

**9.** Prägbares Laminat aus mit Glasfasern verstärktem Polyethylenterephthalat zum Preßformen von Teilen, enthaltend
a) mindestens zwei genadelte Matten aus Glasfasersträngen, die im Laminat in einer Menge von 5 bis 70 Gew.-% des Laminats vorhanden sind, wobei die Glasfasern einen getrockneten Rückstand einer wäßrigen chemischen Behandlungszusammensetzung aufweisen, die im wesentlichen besteht aus:
1. einer wäßrigen Emulsion oder Dispersion eines filmbildenden Bisphenol-A-Polyesterpolymers, das durch Ethoxylierung innerlich emulgiert ist und ein gewichtsmittleres Molekulargewicht im Bereich von 30.000 bis 45.000 und einen Polydispersionsindex von etwa 2 bis etwa 9 und ein Mz/Mv von etwa 1,08 aufweist und das den Hauptteil der Feststoffe der wäßrigen chemischen Behandlungszusammensetzung bildet,
2. gamma-Glycidoxypropyltrimethoxysilan-Kupplungsmittel, das in einer Menge von 0,1 bis 5 Gew.-% der Feststoffe der wäßrigen chemischen Behandlungszusammensetzung vorhanden ist,
3. kationischem Polyamin-Amid-Gleitmittel, das ein teilweise amidiertes Polyalkylenamin ist, hergestellt durch Kondensation mit Fettsäuren, wobei mindestens eine der Fettsäuren Pelargonsäure ist, das in einer Menge von 0,05 bis 0,5 Gew.-% der wäßrigen chemischen Behandlungszusammensetzung vorhanden ist, und
4. Wasser in einer solchen Menge, daß der Gesamtfeststoffgehalt der wäßrigen chemischen Behandlungszusammensetzung im Bereich von 1 bis 30 Gew.-% liegt, wobei die Menge des getrockneten Rückstandes der wäßrigen chemischen Behandlungszusammensetzung im Bereich von 0,1 bis 2 Gew.-% Glühverlust (LOI) der Glasfaserstränge liegt, und
b) Kristallisationskeime aufweisendes Polyethylenterephthalat, das anwesend ist als die Matrix der die Matte verstärkenden Deckschicht, und Imprägnieren der Matte aus einer Deckschicht und einer Unterschicht und einer Zwischenschicht in Kombination mit den Matten aus Glasfasersträngen, wobei das Polyethylenterephthalat eine Kristallisationsgeschwindigkeit hat, die das Verformen des auf den Schmelzpunkt des Polyethylenterephthalats erwärmten Laminats erlaubt und in 20 bis 60 Sekunden bei einer Verformungstemperatur im Bereich von 120 ° C bis 280 ° C Formteile ergibt, die mindestens 30 bis 50% Kristallisation aufweisen.

**10.** Laminat nach Anspruch 9,
**dadurch gekennzeichnet,**
daß das Kristallisationskeime aufweisende Polyethylenterephthalat eine Kristallisationsgeschwindigkeit hat, die die Ausbildung maximaler Kristallisation beim Ausformen des erwärmten Laminats zu Teilen in einer Zeitperiode von weniger als 40 Sekunden erlaubt.

**Revendications**

**1.** Stratifié de polymère thermoplastique renforcé de fibres de verre chimiquement traitées, susceptible d'être estampé ou embouti, caractérisé par
a. la présence de fils de fibres de verre en une proportion de 5 à 70% en poids du stratifié, choisis dans le groupe formé par les fils hachés, les fils continus et les mats de fils hachés et/ou continus, où les fibres de verre comportent le résidu séché d'une composition de traitement chimique aqueuse, comportant :
1) un polymère filmogène, choisi dans le groupe formé par les polymères époxy et les polymères de polyesters sensiblement saturés, époxydés et leurs mélanges, où la matière filmogène possède une température de décomposition thermique d'au moins environ 300 ° C, en une proportion filmogène efficace,
2) des agents de couplage du type organosilane, choisis dans le groupe formé par les agents de couplage contenant des fonctions époxy, organofonctionnels et des mélanges d'agents de couplage organofonctionnels, contenant des fonctions époxy et d'agents de couplage organofonctionnels contenant des radicaux amino, dans le rapport de 1:3 à 99:1,
3) un lubrifiant cationique en une proportion lubrifiante efficace et

4) un véhicule aqueux, en une proportion efficace pour permettre le traitement des fibres de verre et

B. La présence de poly(téréphtalate d'éthylène) en une proportion de résine-matrice efficace et où les fils de fibres de verre sont présents en une proportion de 5 à 200 parties par 100 parties du poly(téréphtalate d'éthylène), où la proportion du résidu chimique présent sur les fibres de verre varie de 0,1 à 2% en poids PAF et où le résidu chimique présent sur les fibres de verre comporte une proportion d'agent de couplage organique provenant de la composition de traitement chimique aqueuse qui varie de 0,1 à 2% en poids de la composition de traitement chimique aqueuse.

**2.** Stratifié suivant la revendication 1, caractérisé en ce que les fils de fibres de verre sous forme d'un mat se présentent sous la forme d'un mat lié choisi dans le groupe formé par les mats mécaniquement liés, les mats aiguilletés et les mats chimiquement liés.

**3.** Stratifié suivant les revendications 1 et 2, caractérisé en ce que le résidu chimique présent sur les fibres de verre comporte une résine de bisphénol-polyester, choisie dans le groupe formé par une résine de bisphénol-polyester qui est émulsifiée de façon interne par éthoxylation et qui est présente dans une dispersion ou une émulsion aqueuse; et un polyester filmogène de bisphénol A alcoxylé dans une émulsion aqueuse possédant une teneur en solides de 46 ± 3%, un pH de 3 à 5, une viscosité à 23°C de 20.000 ± 500 mPa.s (cps) et où les résines de polyester de bisphénol A possèdent un poids moléculaire moyen en poids qui varie de 30.000 à 45.000, où la dispersion ou l'émulsion aqueuse est présente en une quantité telle que le polyester de bisphénol A constitue la fraction majeure des solides de la composition de traitement chimique aqueuse.

**4.** Stratifié suivant les revendications 1 à 3, caractérisé en ce que le résidu chimique présent sur les fibres de verre est sensiblement dépourvu de matières choisies dans le groupe formé par le poly(acétate de vinyle) et n'importe quels agents hygroscopiques qui pourraient absorber l'humidité dans un environnement où règne une forte humidité.

**5.** Stratifié suivant les revendications 1 à 4, caractérisé en ce que le lubrifiant cationique présent dans la composition de traitement chimique aqueuse est un lubrifiant du type polyaminoamide, préparé avec l'acide pélargonique, où le lubrifiant est présent dans la proportion de 0,05 à 0,5% en poids de la composition de traitement chimique aqueuse.

**6.** Stratifié suivant les revendications 1 à 5, caractérisé en ce que le poly(téréphtalate d'éthylène) est choisi dans le groupe formé par un poly(téréphtalate d'éthylène) possédant un taux de cristallisation efficace pour permettre au stratifié chauffé jusqu'au point de fusion du poly(téréphtalate d'éthylène) d'être estampé ou embouti en un produit possédant une cristallisation d'au moins 30 à 50% et ceci en l'espace de 5 à 60 secondes à une température d'estampage ou d'emboutissage de 120 à 220°C, le poly(téréphtalate d'éthylène) devant son taux de cristallisation efficace à la présence d'un ou plusieurs agents de nucléation en une proportion de 0,1 à 1% en poids du poly(téréphtalate d'éthylène), de poly-(téréphtalate d'éthylène) à l'état amorphe de façon que le stratifié puisse être estampé ou embouti par thermoformage ou moulage à froid et le poly(téréphtalate d'éthylène) possède un poids moléculaire moyen en poids qui varie de 45.000 à 65.000.

**7.** Stratifié suivant les revendications 1 à 6, comportant deux couches de mat et au moins une couche supérieure et une couche inférieure de poly(téréphtalate d'éthylène) et une couche de poly(téréphtalate d'éthylène) entre les deux mats.

**8.** Procédé de production de produits moulés, thermoformés, caractérisé en ce que :

a. on forme le stratifié des revendications 1 à 5 et 7, où le poly(téréphtalate d'éthylène) est un poly-(téréphtalate d'éthylène) amorphe, ou un poly(téréphtalate d'éthylène) amorphe de manière prédominante, de façon à permettre au stratifié d'être thermoformé ou moulé à froid, ou est un poly-(téréphtalate d'éthylène) modifié de manière à posséder un taux de cristallisation permettant au stratifié qui est chauffé jusqu'au point de fusion du poly(téréphtalate d'éthylène) d'être estampé ou embouti à une teméprature qui varie de 120°C à 220°C de façon à donner un produit estampé ou embouti possédant une cristallisation d'au moins 30 à 50% en l'espace de 5 à 60 secondes et où le poly(téréphtalate d'éthylène) est fondu et rapidement refroidi de façon à éviter la formation de cristaux pour produire un stratifié dans lequel le poly(téréphtalate d'éthylène) se présente à l'état

amorphe,
b. on moule le stratifié estampable ou emboutissable à une température inférieure au point de fusion du poly(téréphtalate d'éthylène) et supérieure la température de transition vitreuse, où l'on maintient la température à la température de cristallisation pendant une période nécessaire pour induire la cristallisation.

**9.** Stratifié estampable ou emboutissable de poly(téréphtalate d'éthylène) renforcé de fibres de verre, destiné au moulage par compression en pièces ou articles, comprenant :
a. au moins deux mats aiguilletés de fils de fibres de verre, présents en une proportion de 5 à 70% en poids du stratifié, où les fibres de verre comportent un résidu séché d'une composition de traitement chimique aqueuse, essentiellement constituée :
1. d'une dispersion ou émulsion aqueuse d'un polymère filmogène de polyester de bisphénol A et possédant une émulsification interne par éthoxylation et un poids moléculaire moyen en poids qui varie de 30.000 à 45.000 et un indice de polydispersité de 2 à environ 9 et un Mz/Mv d'environ 1,08, constituant la fraction majeure des solides de la composition de traitement chimique aqueuse,
2. d'un agent de couplage de gamma-glycidoxypropyltriméthoxysilane, présent en une proportion de 0,1 à 5% en poids des solides de la composition de traitement chimique aqueuse,
3. un lubrifiant cationique du type polyaminoamide, qui est une polyalkylèneamine, partiellement amidée, préparée par condensation avec des acides gras, où au moins l'un des acides gras est l'acide pélargonique, en une proportion de 0,05 à 0,5% en poids de la composition de traitement chimique aqueuse et
4. de l'eau en une proportion pour donner une teneur en solides totale à la composition de traitement chimique aqueuse, qui varie de 1 à 30% en poids, où la proportion du résidu séché de la composition de traitement chimique aqueuse varie de 0,1 à 2% en poids PAF des fibres de verre et
b. de poly(téréphtalate de polyéthylène) nucléé, présent à titre de matrice du recouvrement de renforcement du mat et imprégnant le mat résultant d'une couche supérieure et d'une couche inférieure et d'une couche intermédiaire, en combinaison avec les mats de fils de fibres de verre, où le poly(téréphtalate d'éthylène) possède un taux de cristallisation qui permet le moulage du stratifié qui est chauffé jusqu'au point de fusion du poly(téréphtalate d'éthylène) en une période de 20 à 60 secondes, à une température de moulage de 120°C à 280°C, de façon à donner des articles ou pièces estampées ou embouties possédant une cristallisation d'au moins 30 à 50%.

**10.** Stratifié suivant la revendication 9, caractérisé en ce que le poly(téréphtalate d'éthylène) possède un taux de cristallisation permettant la formation d'une cristallisation maximale au cours du moulage du stratifié chauffé en un article ou une pièce en une période inférieure à 40 secondes.

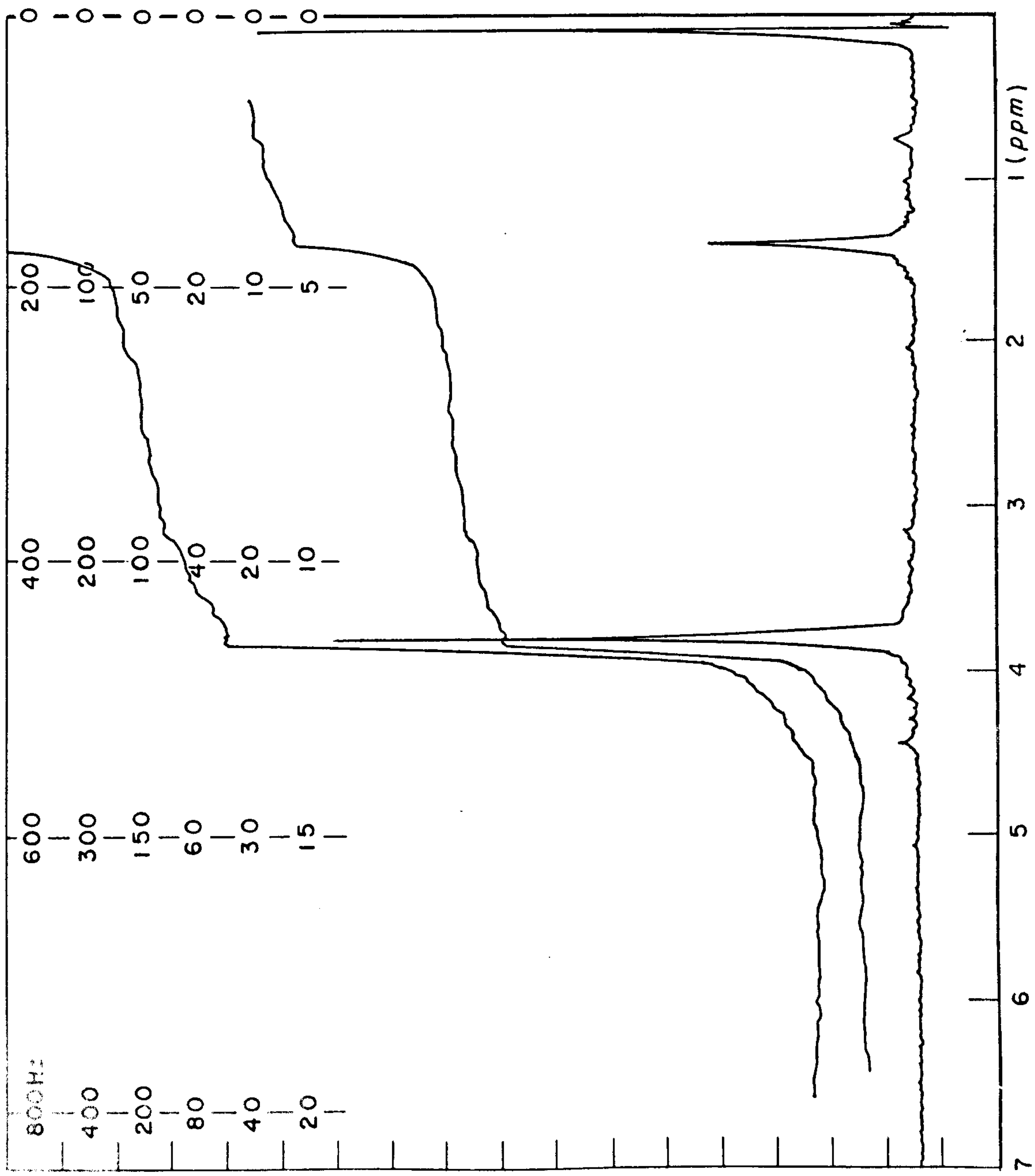


FIG. 1